# EUROPÄISCHE PATENTANMELDUNG

(11) **EP 0 734 806 A2**
(43) Veröffentlichungstag der Anmeldung: **02.10.1996**
(21) Anmeldenummer: 95100510.7
(22) Anmeldetag: 16.01.1995
(51) Int. Cl.: B23K 1/00

(54) **Vorrichtung zum Brennschneiden insbesondere von Brammen**

(30) Priorität: 13.10.1994 DE 4436566
(71) Anmelder: Maschinen- und Werkzeugbau Gesellschaft mit beschränkter Haftung, D-44225 Dortmund (DE)
(72) Erfinder: Grützmacher,Klaus,Dipl.-Ing., 28211 Bremen (DE); Münch,Fritjof Tilemann,Dr.-Ing., 28205 Bremen (DE); Herman,Eberhard, 28759 Bremen (DE); Raffauf,Friedrich,Dipl.-Ing., 27711 Osterholz-Scharmbeck (DE)
(74) Vertreter: Gesthuysen, von Rohr & Weidener

(57) **Zusammenfassung**

Dargestellt und beschrieben ist eine Vorrichtung zum Brennschneiden von im wesentlichen plattenförmigem Schneidgut, insbesondere von Brammen, mit einem Schneidbrenner, der einen Schneidkopf (4) und Leitungseinrichtungen (6, 20, 24) zur Zuführung von Brennstoff, insbesondere Azetylen und Sauerstoff, enthält, mit einem den Schneidkopf (4) tragenden Kragarm (1) und mit einer Einrichtung zum Verschieben des Kragarmes (1) parallel zur Schneideinrichtung.

Die erfindungsgemäße Vorrichtung ist kostengünstig herzustellen und zu betreiben, konstruktiv einfach und mit vertretbarem Aufwand auch transportabel, und zwar dadurch, daß der Schneidkopf (4) am freien Ende (2) des Kragarms (1) befestigt ist und eine Verstelleinrichtung (10) vorgesehen ist, die die Ausladung des Kragarms (1) in Richtung seiner Längsachse (3) zu verändern gestattet.

## Beschreibung

Die Erfindung bezieht sich auf eine Vorrichtung zum Brennschneiden von im wesentlichen plattenförmigem Schneidgut, insbesondere von Brammen, mit einem Schneidbrenner, der einen Schneidkopf und Leitungseinrichtungen zur Zuführung von Brennstoff, insbesondere Azetylen und Sauerstoff, enthält, einem den Schneidkopf tragenden Kragarm und mit einer Einrichtung zum Verschieben des Kragarmes parallel zur Schneidrichtung.

Solch eine Vorrichtung zum Brennschneiden dient insbesondere dem Quer- und Längsteilen von kalten und heißen Brammen verschiedener Abmessungen und Materialzusammensetzungen. Das Teilen der Brammen erfolgt in Abhängigkeit von den Erfordernissen, die sich aus der beabsichtigten Weiterverarbeitung der Brammen ergeben. Beispielsweise begrenzen die Abmessungen des gewünschten Walzgutes die Breite der verarbeitbaren Brammen.

Bei einer bekannten Vorrichtung der eingangs genannten Art ist ein den gesamten Schneidbrenner tragender Wagen entlang der Längsachse des Kragarmes längsverfahrbar gelagert. An der Unterseite des Wagens ist ein nach unten gerichteter Schneidkopf des Schneidbrenners befestigt. Der Wagen enthält Einrichtungen zur Höhenverstellung des Schneidkopfes und ist mit einem ebenfalls am Kragarm entlang seiner Längsachse längsverschiebbar gelagerten Mitnehmer in vorgebbarem Abstand verbunden. Ein in vertikalem Abstand unterhalb des Kragarmes angeordneter Meßfühler am Mitnehmer enthält eine um eine vertikale Achse gelagerte Rolle, die an einer vertikalen Außenkante des Schneidgutes läuft und beim Verschieben des Kragarmes parallel zur Schneidrichtung für ein exaktes Einhalten der Schnittbreite sorgt.

Weil der Kragarm sowohl den Wagen einschließlich des gesamten Schneidbrenners mit allen Verfahr- und Verstelleinrichtungen als auch den Mitnehmer trägt, ist diese Vorrichtung konstruktiv sehr aufwendig. Bei nur geringen Durchbiegetoleranzen des Kragarmes muß insbesondere dem hohen Gewicht, das am Kragarm mitgeführt wird, durch konstruktiv aufwendige Maßnahmen Rechnung getragen werden. Infolgedessen ist diese Vorrichtung sehr teuer und ihr Transport unpraktikabel.

Aufgabe der vorliegenden Erfindung ist es, eine Vorrichtung der eingangs genannten Art zu schaffen, die gleichermaßen kostengünstig herzustellen und zu betreiben, konstruktiv einfach und mit vertretbarem Aufwand auch transportabel ist.

Diese Aufgabe wird erfindungsgemäß bei einer Vorrichtung der eingangs genannten Art dadurch gelöst, daß der Schneidkopf am freien Ende des Kragarmes befestigt ist und eine Verstelleinrichtung die Ausladung des Kragarmes in Richtung seiner Längsachse zu verändern gestattet.

Die Vorteile der Erfindung liegen insbesondere darin, daß der Kragarm nur den Schneidkopf trägt, lanzenartig an der Einrichtung zum Verschieben des Kragarmes verstellbar befestigt ist und alle Einrichtungen zur Verstellung der Position des Schneidkopfes über dem Schneidgut nicht den Kragarm belasten. Diese Anordnung von Kragarm und Schneidkopf ermöglicht es, das Gewicht des Kragarmes und damit das von diesem auf die Halterung ausgeübte Drehmoment gering zu halten, was wiederum eine konstruktiv einfache Verstelleinrichtung erlaubt. Auf diese Weise ist es möglich, die Vorrichtung kostengünstig herzustellen und sie zudem transportabel zu gestalten. Im Gegensatz zu solchen bekannten Brennschneidgeräten, die auf Schienen laufen, welche unmittelbar auf die Brammen aufgelegt werden, gestattet die - nicht aufwendigere - neue Vorrichtung einen hohen Energiedurchsatz und daher eine hohe Schneidgeschwindigkeit von ca. 300 mm/min, die bislang nur von teuren Großgeräten erreicht wurde.

Besonders bevorzugt gestattet die Verstelleinrichtung ein Verschwenken des Kragarmes um eine vertikale Schwenkachse. Vor dem eigentlichen Schneiden kann der Kragarm in eine zur Schneidrichtung parallele Lage geschwenkt werden, so daß das Schneidgut ohne Behinderung durch den Kragarm in die Schneidposition gebracht werden kann.

Vorteilhafterweise gestattet die Verstelleinrichtung eine Höhenverstellung des Kragarmes, um auf diese Weise eine mittelbare Einstellung des Abstandes zwischen Schneidgut und Schneidkopf zu ermöglichen.

Aus statischen Erwägungen ist es vorteilhaft, daß der Kragarm an dem dem freien Ende gegenüberliegenden Ende ein Gegengewicht trägt und sich zwischen den beiden Enden auf der Verstelleinrichtung abstützt. Hierdurch wird die Lagereinrichtung des Kragarmes an der Verstelleinrichtung entlastet.

Besonders bevorzugt ist das Gegengewicht parallel zur Kragarmachse verschiebbar gelagert. Das Gegengewicht kann hierdurch bei unterschiedlichen Verschiebestellungen des Kragarmes so nachgeführt werden, daß sich die Drehmomente des Kragarmes beidseits des Auflagerpunktes ausgleichen. Hierdurch kann auf eine aufwendige Abstützung des Kragarmes verzichtet werden.

Vorteilhafterweise ist das Gegengewicht mit einem Verstellgetriebe gekoppelt, das das Gegengewicht beim Verschieben des Kragarmes längs seiner Achse gegenläufig zur Bewegung des ersten Endes des Kragarmes mit einer Übersetzung verschiebt, die auch beim Verschieben des Kragarmes längs seiner Armachse annähernd gleiche Drehmomente an beiden Enden des Kragarmes gewährleistet. Das Verstellgetriebe bewirkt automatisch ein solches Nachführen des Gegengewichtes beim Verschieben des Kragarmes längs seiner Armachse, daß in allen Verschiebestellungen des Kragarmes am Aufliegerpunkt sich einander ausgleichende Drehmomente der beiden Kragarmenden vorhanden sind.

Die Einrichtung zum Verschieben des Kragarmes enthält besonders bevorzugt eine oder mehrere parallel zur Schneidrichtung verlaufende Führungsprofile und einen Wagen, der entlang den Führungsprofilen verschiebbar gelagert ist. Der Wagen läuft vorteilhafterweise mit Rollen an seiner Unterseite auf zwei parallelen Führungsschienen und ist mit einer unterhalb der Führungsschienen längsverschiebbar gelagerten Rolleneinrichtung verbunden, die als Wiederlager für den Wagen dient und mittels der rückstellenden Kraft einer Feder in Richtung der Unterseite des Wagens gedrückt wird. Die Rolleneinrichtung wirkt als zusätzliche Sicherung für den Wagen, um zu verhindern, daß der Wagen quer zu seiner Bewegungsrichtung aus den Führungsschienen kippt.

Vorteilhafterweise enthält die Verstelleinrichtung ein im wesentlichen senkrecht vom Wagen abzweigendes und um seine Achse drehbar gelagertes Tragprofil, das die Verstelleinrichtung und den Kragarm trägt und das Verschwenken des Kragarmes um eine vertikale Schwenkachse ermöglicht.

Vorteilhafterweise werden Schneckengetriebe zur Längs- und/oder Höhenverstellung an der Verstelleinrichtung eingesetzt, um ein stufenloses Verschieben des Kragarmes in verschiedene Stellungen und dessen Arretieren zu ermöglichen.

Besonders bevorzugt ermöglicht die Leitungseinrichtung eine Zuführung des Brennmaterials aus im Abstand von der Vorrichtung angeordneten Behältern, in denen Azetylen und Sauerstoff zumeist in flüssiger Form bevorratet werden kann.

Besonders bevorzugt enthalten die Leitungseinrichtungen Rohre, die parallel zum Kragarm verlaufen oder sogar besonders bevorzugt Bestandteile des Kragarmes sind und selbst den Brennkopf tragen. Bei dieser Ausgestaltung der Erfindung besteht der Kragarm beispielsweise aus zwei Rohren, die an ihren freien Enden den Brennkopf tragen und Azetylen und Sauerstoff von den Behältern zum Brennkopf zu transportieren ermöglichen.

Vorteilhafterweise enthalten die Leitungseinrichtungen Abschnitte mit flexiblen Leitungen und eine sogenannte Schlauchschleppanlage, die mit Verbindungsmitteln einerseits mit den Behältern und andererseits mit den den Brennkopf tragenden Rohrabschnitten verbindbar sind. Durch die Schlauchschleppanlage folgen die Leitungen mittels einer Schleppverbindung zum Kragarm seinen Bewegungen und sind mit den stationären Behältern verbunden.

Als Schutzmaßnahme werden vorteilhafterweise unterhalb der Leitungseinrichtungen Hitzeabschirmbleche angeordnet, die insbesondere teleskopartig ausgebildet sein können.

Vorteilhafterweise enthält die Vorrichtung eine Auflagereinrichtung für das Schneidgut mit einem seitlichen Anschlag, der parallel zu der Einrichtung zum Verschieben des Kragarmes verläuft. Das Schneidgut (z.B. eine Bramme) wird so auf dem Auflager positioniert, daß es seitlich an dem Anschlag anliegt. Mit Hilfe einer Meßeinrichtung, wie z.B. einer an der Verstelleinrichtung abzulesenden Skala am Kragarm kann nun der Abstand zwischen seitlichem Rand des Schneidgutes und Brennkopf eingestellt werden.

Nachfolgend wird ein Ausführungsbeispiel der Erfindung anhand der Zeichnungen naher erläutert. Es zeigen im einzelnen:
- Fig. 1: eine Seitenansicht der Vorrichtung;
- Fig. 2: eine Aufsicht auf die Vorrichtung, bei der vom Schneidgut verdeckte Teile des Auflagers gestrichelt dargestellt sind.

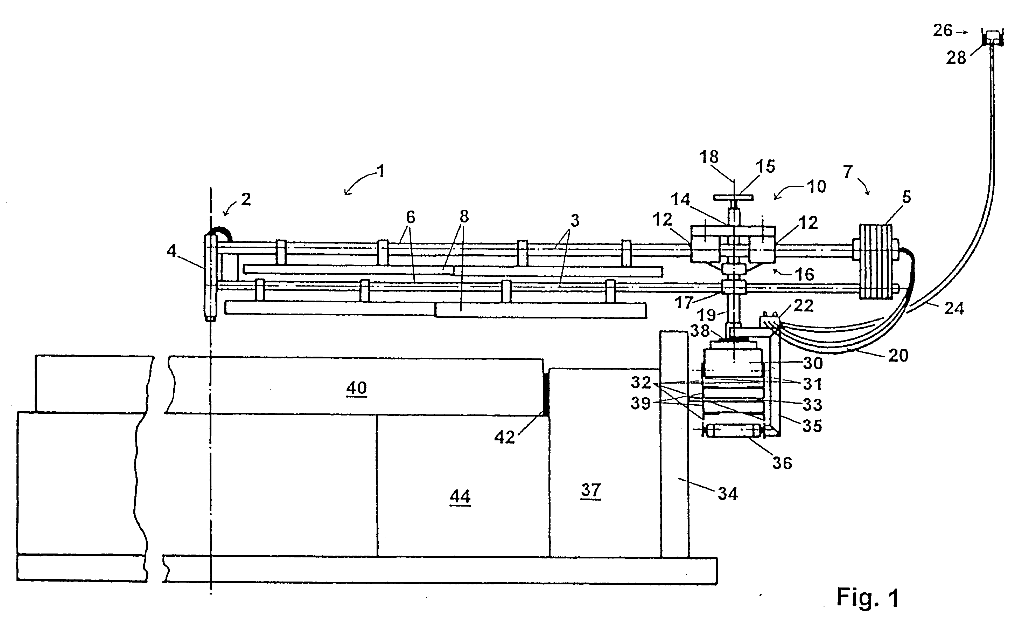

Fig. 1 zeigt eine Ansicht der Vorrichtung mit einem Kragarm 1, der zwei übereinander angeordnete Rohre 6 enthält, unterhalb derer zur Abschirmung der Hitzestrahlung plattenförmige, waagerecht ausgerichtete, teleskopartige Hitzeabschirmbleche 8 angeordnet sind. An dem freien Ende 2 des Kragarmes 1 ist ein Schneidkopf 4 in vertikalem Abstand über dem auf einem Auflager 44 liegenden und seitlich an einen Anschlag 42 angrenzenden flachen quaderförmigen Schneidgut 40 (z.B. einer Bramme) angeordnet, wobei die Längsachse 4a des Schneidkopfes senkrecht zum Schneidgut verläuft.

Das Auflager 44 besteht aus mehreren aufrecht stehenden, parallel beabstandeten und gleich dimensionierten Blechen, beispielsweise Vorbandstreifen. Jedes Blech des Auflagers 44 grenzt an einer seitlichen vertikalen Stirnseite an ein Distanzelement 37, das gleichfalls aus einem parallel zum jeweils angrenzenden Blech des Auflagers 44 ausgerichteten und es in der Höhe geringfügig überragenden Bleches besteht. Die zwischen jedem Distanzelement 37 und den Blechen des Auflagers 44 entstehende Stufe dient als seitlicher Anschlag 42 für das Schneidgut 40. Die Abmessungen der Distanzelemente und damit auch die der Stufe richten sich nach den Einrichtungen zum Transportieren der Brammen.

An der dem Anschlag 42 gegenüberliegenden vertikalen Stirnseite der Distanzelemente 37 verläuft eine durchgängige, sich über mehrere Distanzelemente 37 erstreckende Stützwand 34 quer zu den Distanzelementen 37. Die Stützwand 34 verläuft parallel zur Schneidrichtung und ist gleichfalls aus Blechen aufgebaut. Sie stützt sich einerseits gegen die Distanzelemente 37 und trägt auf der den Distanzelementen 37 abgewandten Seite auf annähernd ihrer gesamten Länge eine waagerechte, in etwa auf Höhe des Schneidgutes 40 rechtwinklig abzweigende finnenartige Konsole 33.

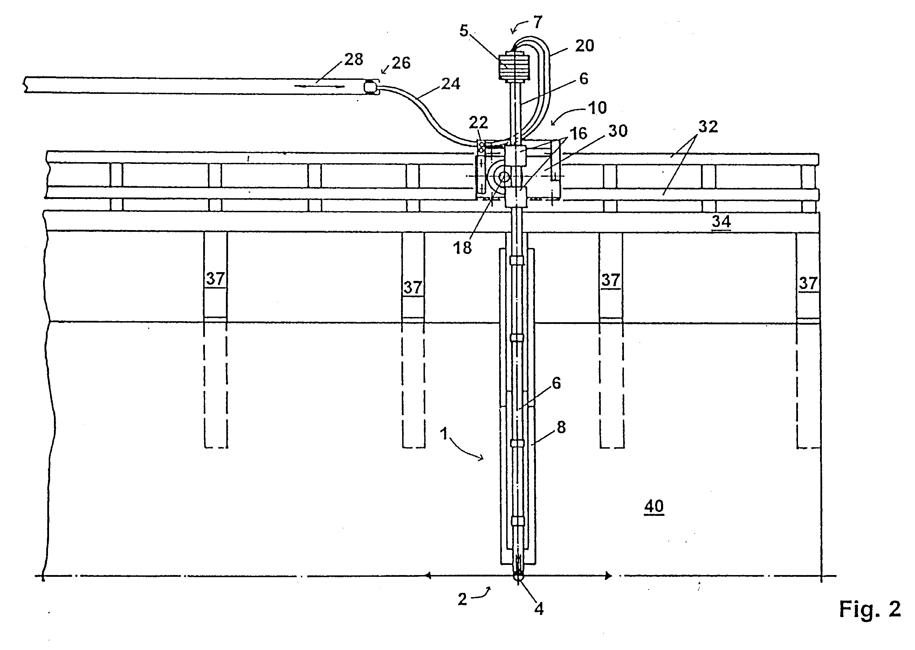

Oberhalb und unterhalb der Konsole 33 sind durch Abstandselemente 39 von der Konsole 33 beabstandet je zwei in horizontalem Abstand angeordnete gleisartige obere und untere Führungsschienen 32 angeordnet, die parallel zur Schneidrichtung verlaufen, die in Fig. 2 mit einem Doppelpfeil symbolisiert ist. Auf den oberen Führungsschienen 32 läuft ein entlang den Führungsschienen 32 längsverschiebbar gelagerter Wagen 30 auf Rädern 31. Der Wagen 30 ist mittels eines U-Profils 35 mit einer Rolleneinrichtung 36 verbunden, die entlang den unteren Führungsschienen 32 unterhalb der Konsole 33 längsverschiebbar gelagert ist, seitlich an einem freien Schenkel des U-Profils axial befestigt ist, dessen Sohle vertikal nach oben bis zur Oberkante des Wagens verläuft und in einen zweiten freien Schenkel mündet, der sich bis oberhalb des Wagens 30 erstreckt und mit dem Wagen 30 verbunden ist. Zwischen dem oberen freien Schenkel des U-Profils 35 und dem Wagen 30 ist eine Feder 38 angeordnet, deren rückstellende Kraft den zweiten freien Schenkel nach oben drückt und somit für einen Anpreßdruck der Rolleneinrichtung 36 in vertikaler Richtung gegen die Führungsschienen sorgt. Insgesamt wird mit dem U-Profil 35, der Feder 38 und der Rolleneinrichtung 36 und den unteren Führungsschienen 32 ein Widerlager für den Wagen 30 geschaffen, das ein seitliches Herauskippen des Wagens 30 aus den oberen Führungsschienen 32 verhindert.

Senkrecht nach oben zweigt vom Wagen 30 ein Tragprofil 19 ab, das ein oberes und ein unteres Führungselement 16 bzw. 17 für den Kragarm 1 trägt, die um eine senkrechte Schwenkachse des Tragprofils 19 verschwenkbar gelagert sind. Das obere Führungselement 16 enthält zwei horizontal beabstandete Lagerbohrungen 12, deren Achsen zueinander fluchtend ausgerichtet sind, durch die hindurch das obere Rohr 6 des Kragarmes 1 verläuft und in ihnen längs seiner Achse verschiebbar gelagert ist. Das untere Führungselement 17 enthält eine Lagerbohrung, deren Lagerachse parallel zu den Lagerbohrungen 12 des Führungselementes 16 verläuft. In ihr ist das untere der Rohre 6 längsverschiebbar gelagert. Ein an dem unteren Führungselement 17 angeordnetes Schneckengetriebe greift in eine Zahnung am unteren Rohr 6 ein und ermöglicht ein stufenloses Verschieben des Kragarmes 1 parallel zu den Längsachsen 3 der Rohre 6, um die Distanz zwischen Schneidkopf 4 und Anschlag 42 einzustellen.

Beide Führungselemente 16 und 17 sind entlang des Tragprofils 19 zusätzlich in vertikaler Richtung verschiebbar. Zwischen dem Tragprofil 19 und dem Führungselement 16 ist hierzu ein Spindelgetriebe 14 angeordnet, das mit einem Handrad 15 bedient wird. Durch die verschwenkbare Anlenkung der Führungselemente 16 und 17 am Tragprofil 19 ist der Kragarm 1 auch um die vertikale Längsachse 18 des Tragprofils 19 verschwenkbar gelagert.

An dem dem freien Ende 2 gegenüberliegenden Ende 7 des Kragarmes 1 ist ein Gewicht 5 angeordnet, das zwei passend zu den Rohren 6 dimensionierte horizontale Bohrungen aufweist, mittels derer es auf die Rohre 6 aufgeschoben ist, wobei die Rohre 6 durch die Bohrungen des Gegengewichtes 5 hindurchreichen. Das Gewicht 5 ist auf diese Weise in axialer Richtung längs der Rohre 6 verschiebbar gelagert, um beim Verschieben des Kragarmes 1 parallel zu den Längsachsen 3 für annähernd gleich Drehmomente unterschiedlichen Vorzeichens am Auflagerpunkt des Kragarmes zu sorgen.

An dem dem freien Ende 2 des Kragarmes 1 gegenüberliegenden Ende 7 mündet das obere Rohr 6 in flexible Schlauchleitungen 20, die Brennstoff aus den Behältern (nicht eingezeichnet) über die durch eine Schlauchschleppanlage 26 geführten flexiblen Schlauchleitungen 24 und die an dem U-förmigen Tragrohr 35 befestigte Ventileinrichtung 22 zur Steuerung der Brennstoffzufuhr zuführen. Wie insbesondere in Fig. 2 erkennbar, enthält die Schlauchschleppanlage 26 eine parallel zu den Führungsschienen 32 verlaufende Führungsbahn 28, so daß beim Verfahren des Kragarmes entlang den Führungsschienen 32 die Schlauchleitungen 24 durch die Schlauchschleppanlage 26 von dem Kragarm 1 geschleppt werden und somit den Bewegungen des Kragarmes 1 folgen können.

## Patentansprüche

1. Vorrichtung zum Brennschneiden von im wesentlichen plattenförmigem Schneidgut, insbesondere von Brammen, mit einem Schneidbrenner, der einen Schneidkopf (4) und Leitungseinrichtungen (6, 20, 24) zur Zuführung von Brennstoff, insbesondere Azetylen und Sauerstoff, enthält, einem den Schneidkopf (4) tragenden Kragarm (1), und mit einer Einrichtung zum Verschieben des Kragarmes (1) parallel zur Schneidrichtung, dadurch gekennzeichnet, daß der Schneidkopf (4) am freien Ende (2) des Kragarms (1) befestigt ist und eine Verstelleinrichtung (10) die die Ausladung des Kragarms (1) in Richtung seiner Längsachse (3) zu verändern gestattet.

2. Vorrichtung nach Anspruch 1, dadurch gekennzeichnet, daß die Verstelleinrichtung (10) ein Verschwenken des Kragarmes (1) um eine vertikale Schwenkachse (18) gestattet.

3. Vorrichtung nach einem der Ansprüche 1 oder 2, dadurch gekennzeichnet, daß die Verstelleinrichtung (10) eine Höhenverstellung des Kragarmes (1) gestattet.

4. Vorrichtung nach einem der vorstehenden Ansprüche, dadurch gekennzeichnet, daß der Kragarm (1) an einem dem freien Ende (2) gegenüberliegenden Ende (7) ein Gegengewicht (5) trägt und sich zwischen seinen beiden Enden (2, 7) auf der Verstelleinrichtung (10) abstutzt.

5. Vorrichtung nach Anspruch 4, dadurch gekennzeichnet, daß das Gegengewicht (5) parallel zur Längsachse (3) des Kragarmes (1) verschiebbar gelagert ist.

6. Vorrichtung nach Anspruch 5, gekennzeichnet durch ein Verstellgetriebe, das das Gegengewicht (5) beim Verschieben des Kragarmes (1) längs seiner Längsachse (3) gegenläufig zur Bewegung des freien Endes (2) des Kragarmes (1) mit einer Übersetzung verschiebt, die dem Betrag nach annähernd gleiche Drehmomente an beiden Enden (2, 7) des Kragarmes (1) auch beim Verschieben des Kragarmes (1) längs seiner Längsachse (3) gewährleistet.

7. Vorrichtung nach einem der vorstehenden Ansprüche, dadurch gekennzeichnet, daß die Einrichtung zum Verschieben des Kragarmes eine oder mehrere parallel zur Schneidrichtung verlaufende Führungsprofile und einen Wagen (30) enthält, der entlang den Führungsprofilen verschiebbar gelagert ist.

8. Vorrichtung nach Anspruch 7, dadurch gekennzeichnet, daß der Wagen (30) auf Führungsschienen (32) läuft und mit Federdruck mit einer unterhalb der Führungsschienen (32) längsverschiebbar gelagerten Rolleneinrichtung (36) verbunden ist, die als Widerlager für den Wagen (30) dient.

9. Vorrichtung nach einem der Ansprüche 7 oder 8, dadurch gekennzeichnet, daß die Verstelleinrichtung (10) ein im wesentlichen senkrecht vom Wagen abzweigendes um seine Achse drehbar gelagertes Tragprofil (19) enthält.

10. Vorrichtung nach einem der vorstehenden Ansprüche, dadurch gekennzeichnet, daß die Verstelleinrichtung (10) mindestens ein Schneckengetriebe zur Längs- und/oder Höhenverstellung enthält.

11. Vorrichtung nach einem der vorstehenden Ansprüche, dadurch gekennzeichnet, daß die Leitungseinrichtungen (6, 20, 24) eine Zuführung des Brennmaterials von einem oder mehreren Behältern ermöglicht, die im Abstand von der Vorrichtung angeordnet sind.

12. Vorrichtung nach Anspruch 11, dadurch gekennzeichnet, daß Leitungseinrichtungen (6, 20, 24) am Kragarm (1) geführt sind.

13. Vorrichtung nach einem der Ansprüche 11 bis 12, dadurch gekennzeichnet, daß die Leitungseinrichtungen (6, 20, 24) Rohre (6) enthalten, die parallel zum Kragarm (1) verlaufen.

14. Vorrichtung nach einem der Ansprüche 11 bis 13, dadurch gekennzeichnet, daß die Leitungseinrichtungen (6, 20, 24) Rohre (6) enthalten, die integraler Bestandteil des Kragarmes (1) sind und den Brennkopf (4) tragen.

15. Vorrichtung nach einem der Ansprüche 11 bis 14, dadurch gekennzeichnet, daß die Leitungseinrichtungen (6, 20, 24) Verbindungsmittel ( 22) enthalten.

16. Vorrichtung nach einem der Ansprüche 14 oder 15, dadurch gekennzeichnet, daß die Leitungseinrichtungen (6, 20, 24) Abschnitte mit flexiblen Leitungen (20, 24) enthalten, die mit den den Brennkopf (4) tragenden Rohrabschnitten (6) verbindbar sind.

17. Vorrichtung nach einem der Ansprüche 11 bis 16, gekennzeichnet durch eine Schlauchschleppanlage, die bei auf die flexiblen Leitungen (24) vom Kragarm (1) bei dessen Verschieben ausgeübten Zugkräften ein Nachführen der Leitungen (24) parallel zur Schneidrichtung ermöglicht.

18. Vorrichtung nach einem der Ansprüche 11 bis 17, gekennzeichnet durch insbesondere teleskopartige Hitzeabschirmbleche (8) unterhalb der Leitungseinrichtungen (6).

19. Vorrichtung nach einem der vorstehenden Ansprüche, gekennzeichnet durch eine Auflagereinrichtung (44) für das Schneidgut (40) mit einem seitlichen Anschlag (42).

20. Vorrichtung nach Anspruch 19, dadurch gekennzeichnet, daß der Anschlag parallel zu der Einrichtung zum Verschieben des Kragarmes verläuft.
